# EUROPÄISCHE PATENTSCHRIFT

(11) **EP 2 428 406 B1**
(45) Veröffentlichungstag und Bekanntmachung des Hinweises auf die Patenterteilung: **29.10.2014**
(21) Anmeldenummer: 11007261.8
(22) Anmeldetag: 07.09.2011
(51) Int. Cl.: B60R 9/10, B60R 9/06

(54) **Lastenträger mit einem Schwenkschiebelager**
Load holder with a pivoting sliding bearing
Support de charge coulissant et basculant

(30) Priorität: 14.09.2010 DE 102010045356
(43) Veröffentlichungstag der Anmeldung: 14.03.2012
(73) Patentinhaber: WESTFALIA - Automotive GmbH, 33378 Rheda-Wiedenbrück (DE)
(72) Erfinder: Recker, Andreas, 33602 Bielefeld (DE)
(74) Vertreter: Bregenzer, Michael

(56) Entgegenhaltungen:
- EP-A1- 1 700 745
- EP-A2- 1 972 499
- DE-A1- 10 315 329
- DE-U1- 20 002 018

## Beschreibung

Die Erfindung betrifft einen Lastenträger für ein Kraftfahrzeug, mit einem an einem Heck des Kraftfahrzeugs befestigbaren oder anordenbaren Grundträger, gemäß dem Oberbegriff des Anspruchs 1.

Ein derartiger Lastenträger geht beispielsweise aus EP 1 700 745 A1 hervor.

Ein weiterer Lastenträger geht beispielsweise aus EP 1 972 499 A2 hervor. Der Lastenträger gemäß dem bevorzugten Ausführungsbeispiel dieser Schrift ist zwar über eine Viergelenk-Anordnung schwenkbar, wobei die Schwenkachse nicht raumfest ist, sondern sich während des Bewegens zwischen der Ladestellung und der Transportstellung räumlich verändert. Es ist aber auch eine Schwenklageranordnung erläutert, die mit Hilfe einer Linearführung ein Schwenken und zusätzlich ein lineares verfahren ermöglicht.

Bei bezüglich des Grundträgers beweglichen Lastaufsätzen ist eine bequeme Handhabung wünschenswert. Zudem soll der Platzbedarf während des Verschwenkens zwischen der Ladestellung und der Transportstellung möglichst klein sein, das heißt es ist zweckmäßig, wenn der Lastenaufsatz bezüglich des Grundträgers in der Ladestellung möglichst wenig ausgelenkt ist. Bei der bekannten Viergelenkanordnung schwenkt der Lastenträger beispielsweise nach oben hinten verhältnismäßig weit aus.

Davon ausgehend ist es die Aufgabe der vorliegenden Erfindung, einen Lastenträger bereitzustellen, der möglichst einfach handhabbar ist.

Zur Lösung der Aufgabe ist ein Lastenträger gemäß der technischen Lehre des Anspruchs 1 vorgesehen.

wenn der Lastenaufsatz die Ladestellung einnimmt, ist beispielsweise ein Schwenkbereich einer Heckklappe des Kraftfahrzeuges freigegeben. Jedenfalls ist ein Heckbereich des Kraftfahrzeuges leichter zugänglich, bzw. zum Be- und Entladen.

Ein Grundgedanke der Erfindung ist es, nicht nur eine Schwenkbarkeit und Verschieblichkeit bereitzustellen, sondern dies über eine Lageranordnung bereitzustellen, die mindestens ein, zweckmäßigerweise mehrere, beispielsweise ein Paar, Schwenkschiebelager aufweist. Das Schwenkschiebelager ermöglicht zum einen ein Schwenken, zum anderen aber auch ein lineares Verschieben des Lastenaufsatzes. Somit ist es möglich, den Lastenaufsatz um die Schwenkachse zu schwenken und ferner, nach dem schwenken oder auch simultan, quer zur Schwenkachse zu verschieben. Dadurch ist eine platzsparende Betätigung möglich, das heißt der Lastenaufsatz lenkt während seines Verstellens zwischen der Ladestellung und der Transportstellung verhältnismäßig wenig weit aus.

Die Zwangsführungsmittel stellen dabei sicher, dass der Lastenaufsatz während seines Schwenkens, vorzugsweise auch in einer oder beiden der Transportstellung oder der Ladestellung eine definierte position relativ zum Grundträger einnimmt. Der Bediener muss also keine zusätzliche Anstrengung darauf verwenden, den Lastenaufsatz bezüglich des Grundträgers im Bereich des Stellweges zu halten oder zu führen. Dies wird durch die Zwangsführungsmittel gelöst.

Der Grundträger und/oder der Lastenträger können zweckmäßigerweise gestellartig ausgestaltet sein, so dass beispielsweise ein Grundträgergestell und/oder ein Lastaufsatzgestell vorhanden sind. Es ist aber auch möglich, dass der Grundträger und/oder der Lastenaufsatz beispielsweise eine plattenartige Gestalt aufweisen oder einen sonstig geometrisch ausgestalteten Tragkörper oder Grundkörper haben, je nach Bedarf.

Beispielsweise kann der Grundträger in der Art einer Schublade ausgestaltet sein, die in das Kraftfahrzeug einschiebbar bzw. in einen Heckbereich einer Karosserie des Kraftfahrzeuges einschiebbar bzw. aus diesem wieder ausziehbar ist. Eine bevorzugte Ausgestaltung der Erfindung sieht nämlich vor, dass der Lastenträger eine Fahrzeug-Lageranordnung aufweist, mit der er am Kraftfahrzeug beweglich gelagert ist, beispielsweise schiebbeweglich und/oder schwenkbeweglich. Eine andere Ausführungsform sieht vor, dass der Lastenträger mit einer Befestigungseinrichtung zum lösbaren Befestigen, insbesondere an einer Anhängekupplung oder einem sonstigen Bauteil, des Kraftfahrzeuges ausgestattet ist. Die Befestigungseinrichtung umfasst beispielsweise Klemmmittel zum Anklemmen an eine Kupplungskugel der Anhängekupplung. Bei allen vorgenannten Ausführungsformen sind also Verbindungsmittel vorhanden, mit denen der Lastenträger am Kraftfahrzeug lösbar befestigbar und/oder beweglich gelagert ist.

Die Zwangsführungsmittel können gemäß den nachfolgenden Ausführungen verschiedene Ausführungsformen aufweisen oder umfassen:

Die Erfindung sieht vor, dass die Zwangsführungsmittel einen an dem Grundträger mit einem Grundträger-Lager und an dem Lastenaufsatz mit einem Lastenaufsatz-Lager beweglich gelagerten Lenkarm umfassen. Der Lenkarm lenkt also die Bewegung des Lastenaufsatzes bezüglich des Grundträgers zwischen der Transportstellung und der Ladestellung.

Es ist bevorzugt, dass das Grundträger-Lager oder das Lastenaufsatz-Lager ein Schwenklager umfassen. Eine bevorzugte Ausführungsform sieht dabei vor, dass das jeweilige Schwenklager ausschließlich eine Schwenkbewegung des Lenkarms relativ zum Grundträger oder zum Lastenaufsatz zulassen. Es ist aber auch eine kombinierte Schwenkschiebebewegung möglich, beispielsweise wenn das Grundträgerlager und/oder das Lastenaufsatz-Lager ein Schiebelager umfassen. weiterhin ist es denkbar, dass mindestens eines der Lager nur ein Schiebelager umfasst.

Das Lastenaufsatz-Lager ist zweckmäßigerweise an einem dem Heck des Kraftfahrzeuges beim Betrieb des Lastenträgers zugeordneten Endbereich des Lastenaufsatzes angeordnet. Mithin ist also der Lenkarm (es können auch mehrere Lenkarme vorhanden sein, genauso wie mehrere Schwenkschiebelager möglich sind), an demjenigen Endbereich des Lastenaufsatzes angeordnet, der sozusagen zum Heckbereich des Kraftfahrzeuges hinschwenkt oder von diesem wegschwenkt.

Das mindestens eine Schwenkschiebelager, das Grundträgerlager und das Lastenaufsatz-Lager bilden zweckmäßigerweise ein Dreigelenk. Dabei sieht eine bevorzugte Ausführungsform vor, dass das Grundträgerlager und das Lastenaufsatz-Lager Schwenklager sind, die Schiebbewegung ausschließlich vom Schwenkschiebelager bereitgestellt wird.

Das mindestens eine Schwenkschiebelager ist an einem von dem Heck des Kraftfahrzeugs entfernten, freien Endbereich des Grundträgers angeordnet. Somit ist also ein möglichst weites Wegschwenken des Lastenaufsatzes vom Grundträger, somit auch vom Heck des Kraftfahrzeuges, möglich.

Das Schwenkschiebelager umfasst beispielsweise eine Rolle oder auch eine Kombination aus Rolle und Gleitkörper. Eine Ausführungsform kann dabei vorsehen, dass einerseits eine Rolle, andererseits ein Gleitkörper ein einziges Schwenkschiebelager bilden. Der Gleitkörper stellt eine zuverlässige Führung des jeweils geführten bzw. an ihn gleitbeweglich gelagerten Bauteiles bereit, während die Rolle eine leichtere Beweglichkeit ermöglicht.

Die Zwangsftihrungsmittel umfassen zweckmäßigerweise mindestens ein Paar drehbar gelagerter Rollen, die an einander entgegengesetzten Seiten jeweils eine Abrollfläche aufweisen, wobei an den Abrollflächen einander gegenüberliegende Innenflächen einer Schiene des Grundträgers oder des Lageraufsatzes rollbar gelagert sind. Die Rollen sind unabhängig voneinander drehbar gelagert, so dass sie in entgegengesetztem Drehsinn drehbar sind, wenn die Schiene an ihnen abrollt.

Eine andere, auch in Kombination mit der vorigen Ausführungsform der Zwangsführungsmittel mögliche Ausgestaltung, der Zwangsführungsmittel sieht vor, dass diese mindestens einen Gleitkörper umfassen, der an einander entgegengesetzten seiten jeweils eine Gleitfläche aufweist. An den Gleitflächen sind die einander gegenüberliegenden Innenflächen einer Schiene des Grundträgers oder der Lastenaufsatzes gleitverschieblich gelagert.

Bei beiden Ausführungsformen ist gewährleistet, dass die einander gegenüber liegenden Innenflächen stets geführt sind, so dass die Zwangsführung realisiert ist. Wenn nur eine einzige Rolle vorhanden ist, ist dies nämlich kaum möglich, da nur eine Abrollfläche der Rolle mit einer Innenfläche der Schiene in Verbindung sein sollte, während beispielsweise eine dieser Abrollfläche entgegengesetzte Seite der Rolle frei drehbar sein sollte. Wenn natürlich ein entsprechender Reibwiederstand oder Gleitwiederstand akzeptiert wird, wäre auch eine solche Ausführungsform denkbar, bei der einander entgegengesetzte Abrollflächen und Gleitflächen einer Rolle jeweils an einer Innenfläche einer Schiene rollbar bzw. gleitbar gelagert sind, wobei diese Flächen einander gegenüberliegen. Man kann die Gleitverschieblichkeit beispielsweise dadurch verbessern, dass eine der Innenflächen mit einer Gleitbeschichtung versehen ist oder jedenfalls einen geringen Reibkoeffizienten aufweist.

Der mindestens eine Gleitkörper ist zweckmäßigerweise an dem Grundträger oder dem Lastenaufsatz schwenkbar gelagert.

Der mindestens eine Gleitkörper ist vorteilhaft aus Kunststoff.

Bevorzugt ist vorgesehen, dass der mindestens eine Gleitkörper einen Bestandteil des mindestens einen Schwenkschiebelagers bildet.

Zum Verrasten des Lastenaufsatzes in der Transportstellung und/oder der Ladestellung sind zweckmäßigerweise Rastmittel vorhanden.

Weiter ist es vorteilhaft, wenn Verriegelungsmittel vorhanden sind, die zum Verriegeln des Lastenaufsatzes in der Transportstellung und/oder der Ladestellung ausgestaltet sind.

Bevorzugt umfassen die Verriegelungsmittel einen an dem Lastenaufsatz beweglich gelagerten Riegel, wobei der Riegel zweckmäßigerweise am Schwenkschiebelager geführt ist und/oder das Schwenkschiebelager durchsetzt. Somit greift also der Riegel vor Ort, direkt am Schwenkschiebelager an, was eine optimale Verriegelung ermöglicht. Beispielsweise ist der Riegel in Längsrichtung des Lastenträgers, die der Fahrzeuglängsrichtung des Kraftfahrzeuges entspricht, verschiebebeweglich gelagert. Es ist aber auch selbstverständlich auch denkbar, einen Schwenkriegel oder Schwenkschiebe-Riegel vorzusehen.

Ein beim Ausführungsbeispiel noch näher beschriebenes Gleichteilprinzip sieht vor, dass der Riegel zum einen an dem vorbeschriebenen, mindestens einen Gleitkörper verschieblich gelagert ist, zum andern auch an einem Führungskörper, der mit dem Gleitkörper baugleich ist. Somit kann also ein und dasselbe Bauteil zum einen lediglich die Führung des Riegels bereitstellen, zum anderen zusätzlich einen Bestandteil des Schwenkschiebelagers und/oder der Zwangsführungsmittel bilden.

Im Sinne einer bequemen Handhabung ist es auch, wenn der Lastenträger zur Begrenzung des Stellweges des Lastenaufsatzes in der Ladestellung und/oder der Transportstellung zweckmäßigerweise ein flexibles Fangelement aufweist, das in der Ladestellung oder der Transportstellung (je nach dem, in welcher Stellung es seinen Begrenzungszweck erfüllt), gespannt ist. Von dieser Stellung entfernt, das heißt abseits der Ladestellung bzw. der Transportstellung, ist das Fangelement entspannt. Bei dem Fangelement handelt es sich beispielsweise um ein Seil, ein Band oder ein sonstiges, zweckmäßigerweise eine Längsgestalt aufweisendes Fangelement.

Eine weitere Ausführungsform sieht vor, dass zur Begrenzung des Stellweges des Lastenaufsatzes in der Ladestellung und/oder der Transpoststellung mindestens ein Endanschlag vorgesehen ist, an den der Lastenaufsatz und/oder die Lageranordnung in der Transpoststellung und/oder der Ladestellung anschlägt.

Ein freier, vom Grundträger in der Ladestellung am weitesten entfernter Endbereich des Lageraufsatzes hat zweckmäßigerweise in der Ladestellung einen Abstand vom Untergrund. Dieser Endbereich hat also einen solchen Abstand vom Grundträger in der Ladestellung, dass, wenn der Lastenaufsatz am Kraftfahrzeug montiert ist, ein Abstand zwischen diesem Endbereich und dem Untergrund, z.B. der Fahrbahn, auf der das Kraftfahrzeug fährt, vorhanden ist.

An dieser Stelle sei bemerkt, dass unter "Kraftfahrzeug" in erster Linie PKWs verstanden werden, wobei jegliche Antriebsart (Verbrennungsmotor, Elektromotor oder dergleichen) denkbar ist.

Weiterhin kann der Lastenaufsatz zur Befestigung bzw. zum Tragen verschiedenartigster Lasten ausgestaltet sein, z.B. Fahrrädern, Skiern, Surfbrettern oder dergleichen. An dem Lastenträger sind dann entsprechende Befestigungsmittel vorhanden, beispielsweise eine Tragplattform, Rinnen zum Aufstellen von Fahrrädern, insbesondere schwenkbare Rinnen.

Weiterhin sieht die Erfindung vor, dass der Lastenaufsatz zum Tragen einer Transportbox ausgestaltet ist oder eine solche ausbildet.

Im Zusammenhang mit den im folgend noch im Detail beschriebenen Ausführungsbeispiel wird deutlich, dass die erfindungsgemäße Ausgestaltung des Lastenträgers eine bequeme Handhabung auch bei schweren vom Lastenaufsatz getragenen Lasten ohne weiteres möglich ist.

Zu der Ausführungsform des mindestens einen Gleitkörpers, der an einander entgegengesetzten Innenflächen einer Schiene des Grundträgers gleitverschieblich gelagert ist, ist auch zu bemerken, dass dieser selbstverständlich Bestandteil von Zwangsführungsmitteln bilden kann, die nicht über einen vollständigen Stellweg zwischen Transportstellung und Ladestellung wirksam sind, sondern nur über einen Teilbereich desselben.

Auch weitere Ausgestaltungen der Erfindung, beispielsweise der im Zusammenhang mit dem Schwenkschiebelager zweckmäßige Lenkarm, können so ausgestaltet sein, dass nicht der vollständige Weg zwischen Transportstellung und Ladestellung zwangsgeführt ist.

Eine bevorzugte Ausführungsform der Erfindung sieht vor, dass der Lastenaufsatz unmittelbar ausgehend von der Ladestellung und/oder der Transportstellung eine Schwenkbewegung beginnt. Dadurch ist ein besonders raumsparendes Verstellen des Lastenaufsatzes möglich.

Nachfolgend wird ein Ausführungsbeispiel der Erfindung anhand der Zeichnung erläutert. Es zeigen:
- Figur 1: eine perspektivische Schrägansicht eines erfin-dungsgemäßen Lastenträgers,
- Figur 2: den Lastenträger gemäß Figur 1, jedoch mit teilweise entfernten Komponenten des Lastenaufsatzes von schräg hinten,
- Figur 3: den Lastenträger in einem ähnlichen Zustand wie in Figur 2, jedoch von schräg vorn,
- Figur 4: den Lastenträger in einer ähnlichen Perspektive wie in Figur 3, jedoch mit teilweise von einer Transport-stellung in Richtung einer Ladestellung verstelltem Ladeaufsatz,
- Figur 5: den Lastenträger ähnlich wie in Figur 4, jedoch vollständig in die Ladestellung verschwenkt, und
- Figur 6: den Lastenträger mit teilweise entfernten Komponenten in der Ladestellung, jedoch von schräg hinten.

Ein Lastenträger 10 kann mit beispielsweise einer Befestigungseinrichtung 11 umfassenden Verbindungsmitteln an einem schematisch dargestellten Kraftfahrzeug 12 befestigt werden, beispielsweise an dessen Anhängekupplung 13.

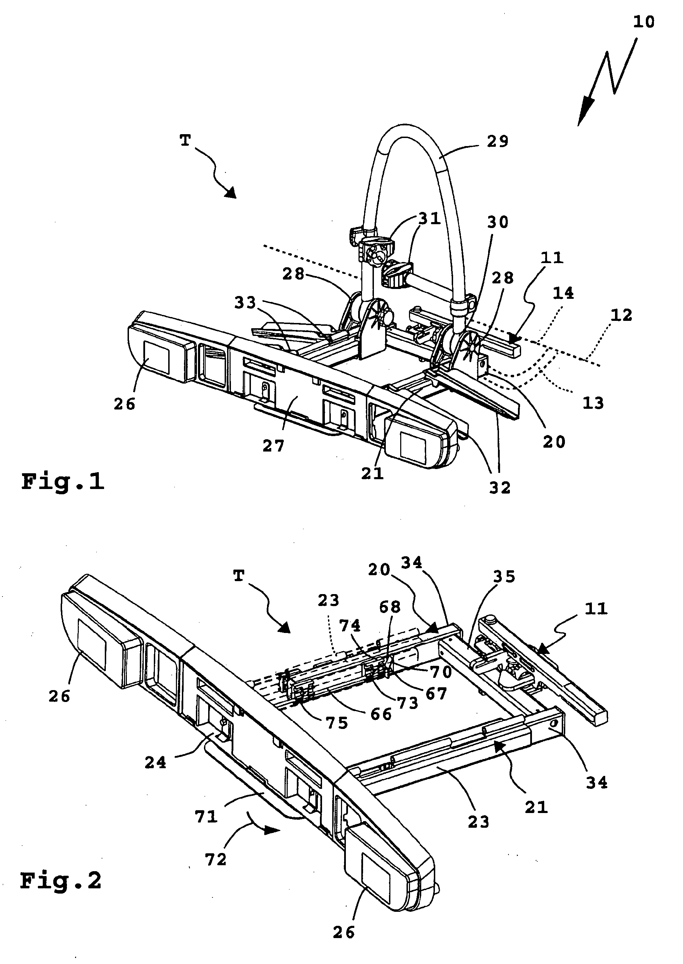

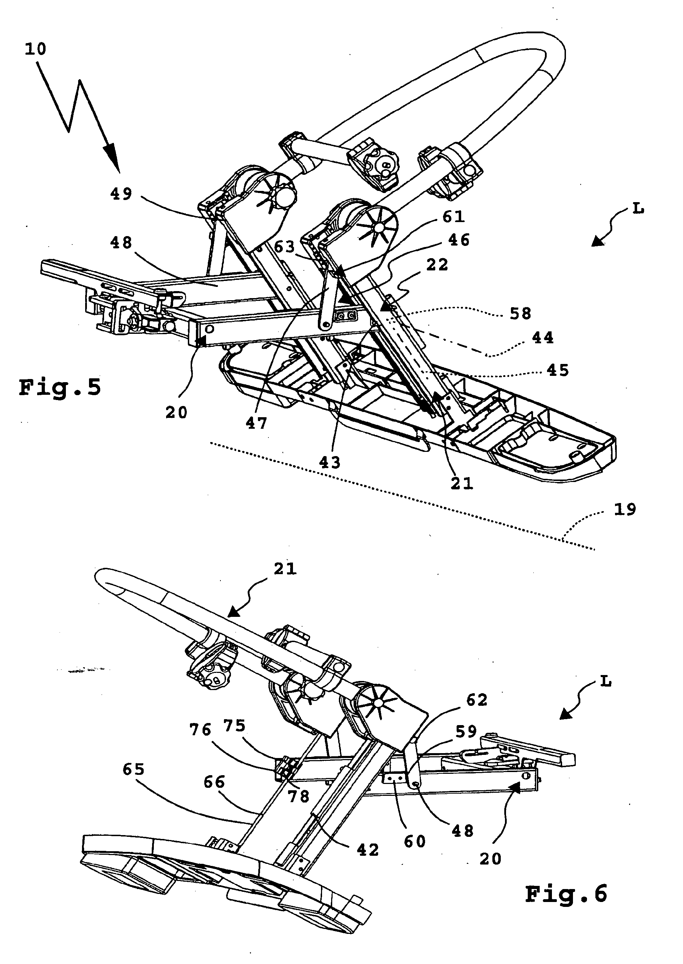

Der Lastenträger 10 steht also bei Gebrauch, das heißt wenn er am Kraftfahrzeug 12 montiert ist und zum Tragen einer Last bereit steht, nach hinten vor ein Heck 14 des Kraftfahrzeuges 12 vor. Dort ist er allerdings beim Beladen des Kraftfahrzeugs, beispielsweise beim Öffnen einer Heckklappe, in der in Figur 1 dargestellten Transportstellung T im Wege. Er ist allerdings bequem und sicher in eine Ladestellung L verstellbar (Figuren 5, 6), so dass das Heck 14 bequem zugänglich ist, beispielsweise zum Be- und Entladen des Kraftfahrzeugs 12.

An dieser Stelle sei bemerkt, dass beispielsweise anstelle der Befestigungseinrichtung 11 auch eine Fahrzeug-Lageranordnung, beispielsweise Teleskopschienen oder dergleichen, vorgesehen sein können, um den Lastenträger 10 in die vor das Heck 14 vorstehende Stellung oder in eine Ruhestellung zu verstellen, in der er zumindest im Wesentlichen im Heck 14 des Kraftfahrzeuges 12, beispielsweise in der Art einer Schublade, aufgenommen ist.

Der Lastenträger 10 umfasst einen Grundträger 20, an dem ein Lastenaufsatz 21 mittels einer Lageranordnung 22 zwischen der Transportstellung T und der Ladestellung L beweglich gelagert ist. Der Lastenaufsatz 21 dient zum Tragen einer Last. Der Lastenaufsatz 21 dient in der Ausbaustufe gemäß der Zeichnung zum Befördern von Fahrrädern, wobei auch andere Lasten, beispielsweise Transportboxen, Skier oder dergleichen, bei entsprechend anderer Ausgestaltung oder anderem Aus- oder Aufbau des Lastenaufsatzes ohne weiteres möglich sind.

Der Lastenaufsatz 21 umfasst zwei Längsträger 23, die durch einen Querträger 24 miteinander verbunden sind. Die Längsträger 23 bilden die Seitenschenkel, der Querträger 24 den Grundschenkel einer U-förmigen Anordnung. Insgesamt sind die Längsträger 23 und der Querträger 24 Bestandteile eines Lastenaufsatz-Gestells.

Der Querträger 24 wird beispielsweise durch ein Kunststoffteil oder einen Einsatz an einem Kunststoffteil gebildet. Der Querträger 24 bildet einen Bestandteil eines hinteren Querbauteils. Der Querträger 24 ist der mittlere Abschnitt des hinteren Querabschlusses des Lastenträgers 10. An dem Querträger 24 sind mittels Lagern 25 Leuchten 26 beweglich, beispielsweise schwenkbar und/oder verschieblich gelagert. Somit können die Leuchten 26 in Richtung der Längsträger 23 geschwenkt werden, wenn man sie nicht braucht. Dadurch baut der Lastenträger 10 bei Nichtgebrauch kompakt. An dem Querträger 24 ist eine Halterung 27 für ein Kennzeichen vorhanden, so dass man den Querträger 24 auch als Kennzeichenträger bezeichnen könnte.

An den vom Querträger 24 entfernten Endbereichen der Längsträger 23 sind Halter 28 zum Halten eines Halteelements 29, beispielsweise eines U-förmigen Bügels, befestigt. Bei Gebrauch ist das Halteelement 29 hochstehend, das heißt es steht von den Längsträgern 23 winkelig, z.B. rechtwinkelig ab, kann jedoch bei Nichtgebrauch in Richtung der Längsträger 23 mittels Schwenklagern 30 an den Haltern 28 geschwenkt werden. Zum Lösen bzw. Festlegen der Schwenklager 30 sind beispielsweise Knebelschrauben oder sonstige Klemmmittel vorgesehen.

Am Halteelement 29 befinden sich Klammerhalter 31, die ausgehend von der in Figur 1 dargestellten Nichtgebrauchsstellung in Richtung der Längsträger 23 weggeschwenkt werden können, wo sie dann zum Halten und Klammern von beispielsweise Rahmen nicht dargestellter Fahrräder dienen.

Diese Fahrräder können auf Trageelementen 32 aufgestellt werden, die seitlich von den Längsträgern 23 abstehen. Bei den Tragelementen 32 handelt es sich beispielsweise um Tragplatten oder, wie beim Ausführungsbeispiel, um Rinnen, in die Räder von Fahrrädern eingestellt werden können. Die Trageelemente 32 sind mittels Schwenklagern 33 am Lastenaufsatz 21, insbesondere den Längsträgern 23 schwenkbar gelagert, so dass sie zwischen der in Figur 1 dargestellten Gebrauchsstellung, in der sie in Richtung der Leuchten 26 ausgeschwenkt sind, und einer nicht dargestellten Nichtgebrauchsstellung schwenkbar sind, in der sie sich im Wesentlichen zwischen den beiden Längsträgern 23 befinden. Es versteht sich, dass anstelle einer Schwenklagerung auch eine Schiebelagerung der Tragelemente 32 möglich ist. Auf dieses kommt es jedoch nicht an.

Der Lastenaufsatz 21 ist als Ganzes, das heißt einschließlich seiner vorher erläuterten Befestigungskomponenten, gegebenenfalls auch einer aufgelegten Last, einer Transportbox oder dergleichen, bezüglich des Grundträgers 20 zwischen der Transportstellung T und der Ladestellung L beweglich gelagert.

Auch der Grundträger 20 ist gestellartig aufgebaut, das heißt er bildet eine Art Grundträger-Gestell.

Der Grundträger 20 umfasst zwei Längsträger 34, die parallel zueinander verlaufen und durch einen Querträger 35 miteinander verbunden sind. Am Querträger 35, sozusagen dem fahrzeugnahen Bauteil, befindet sich die Befestigungseinrichtung 11. Auch der Grundträger 20 hat eine U-förmige Gestalt, das heißt die beiden Längsträger 34 bilden die Seitenschenkel, der Querträger 35 den Grundschenkel des Grundträgers 20. In der in Figur 1 dargestellten Transportstellung T liegen die Längsträger 23 des Lastenaufsatzes 21 auf den Längsträgern 34 des Grundträgers 20 auf. So sind sie also bezüglich ihrer Längslänge weitgehend unterstützt, so dass eine stabile Konfiguration beim Fahrbetrieb des Kraftfahrzeuges 12 bzw. des Lastenträgers 10 gegeben ist. Aber auch ein bequemes Be- und Entladen des Kraftfahrzeuges 12 ist möglich, wenn nämlich die Ladestellung L erreicht ist.

Dazu sind die folgenden Maßnahmen getroffen.

Der Grundträger 20 und der Lastenaufsatz 21 bilden, wie erläutert, jeweils U-förmige Konfigurationen. Dabei sind diese beiden U-förmigen Träger gegensinnig orientiert, das heißt die Querträger 24, 35 liegen einander gegenüber, während die Längsträger 23, 34 aufeinanderliegen bzw. zumindest parallel zueinander angeordnet sind. Auch das Letztere, das heißt ein nicht unmittelbares aufeinanderliegen der jeweiligen Längsträger wäre bei einem erfindungsgemäßen Lastenträger möglich, das heißt dass die Längsträger in keiner der Stellungen unmittelbar aufeinander aufliegen müssen, sondern auch parallel nebeneinander verlaufen könnten. Das ist jedoch bei dem in der Zeichnung dargestellten Ausführungsbeispiel nicht der Fall.

Vielmehr liegen die Längsträger 23 auf der Oberwand 36 der Längsträger 34 des Grundträgers 20 zumindest in der Transportstellung T auf. Die Längsträger 34 haben beispielsweise ein im Wesentlichen rechteckiges Querschnittsprofil, wobei die Oberwände 36 vorteilhaft die Schmalseiten sind, während die davon sich wegerstreckenden Seitenwände 39 vergleichsweise hoch sind, was eine optimale Belastbarkeit ermöglicht. Es sind aber auch niedrigere Seitenwände bei breiter Oberwand möglich. Das Profil der Längsträger 23 korrespondiert dazu. An der Oberwand 38 befinden sich Lageraufnahmen 42 der Schwenklager 33. Die Lageraufnahmen 42 werden beispielsweise von einer Lagerwelle oder einer Lagerachse durchsetzt, die auch entsprechende Lageraufnahmen an den Rinnen bzw. Trageelementen 32 durchsetzt.

An die Seitenwände 39 der Längsträger 23 schließen sich untere Bodenwände 40 an, zwischen denen ein Schlitz 41 ausgebildet ist. Die Breite des Schlitzes 41 ist so bemessen, dass der (untere) Längsträger 34 in den jeweils oberen Längsträger 23 eintauchen kann (in der Transportstellung T) . Dann liegen die Oberwände 36, 38 zweckmäßigerweise im Wesentlichen flächig aufeinander auf. Zwischen den Seitenwänden 37 und 39 sind jedoch Abstände vorhanden, so dass weitere Komponenten, beispielsweise der nachfolgend im Detail beschriebenen Schwenkschiebelager 43, von Verriegelungsmitteln und dergleichen mehr geschützt untergebracht sind, jedoch Platz haben.

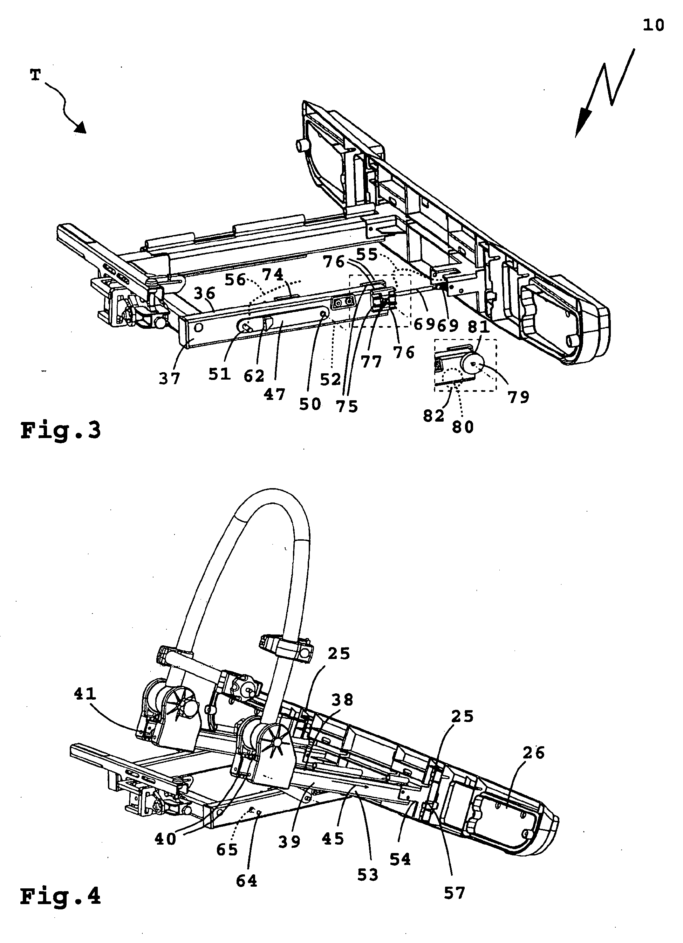

Die Lageranordnung 22 umfasst nämlich die bereits erwähnten Schwenkschiebelager 43. Die Schwenkschiebelager 43 erlauben es, dass der Lastenaufsatz 21 zum einen um eine Schwenkachse 44 schwenken kann, zum andern auch quer zu dieser Schwenkachse 44 entlang der Schwenkschiebelager 43 verschieblich ist, nämlich linearverschieblich. Die Schwenkschiebelager 43 sind bezüglich des Grundträgers 20 an den vom Querträger 35 entfernten Längsendbereichen der Längsträger 34 angeordnet, so dass der Lastenaufsatz 21 quasi um einen freien Endbereich bzw. einen vom Kraftfahrzeug 12 entfernten Endbereich (wenn der Lastenträger 10 an diesem befestigt ist) beweglich gelagert ist. Damit schwenkt der Lastenaufsatz 21 möglichst weit weg vom Heck 14 des Kraftfahrzeugs 12. Beispielsweise ist dies vorteilhaft, wenn eine (nicht dargestellte) Heckklappe des Kraftfahrzeugs 12 weit ausschwenkt, was beispielsweise bei sogenannten Vans, Transportern oder dergleichen der Fall ist. Der Lastenaufsatz 21 ist also zusätzlich um eine Schiebeachse 45, in Figur 4 durch einen Pfeil angedeutet, quer zur Schwenkachse 44 beweglich.

Dennoch ist eine bequeme Handhabbarkeit vorhanden, wozu Zwangsführungsmittel 46 mit Vorteil beitragen:
Die Zwangsführungsmittel 46 umfassen nämlich einen Lenkarm 47, der die Bewegung des Lastenaufsatzes 21 relativ zum Grundträger 20 bei Schwenken und Schieben mittels der Schwenkschiebelager 43 lenkt und führt, Der Lenkarm 47 ist mittels eines Grundträger-Lagers 48 am Grundträger 20, beispielsweise den Längsträgern 34 schwenkbar gelagert. Zwischen dem Lenkarm 47 und dem Lastenaufsatz 21 ist ein Lastenaufsatz-Lager 49 vorgesehen. Die beiden Lager 48, 49 sind als Schwenklager ausgestaltet, wobei eines oder beide davon auch als Schwenk-Schiebelager oder Schiebelager ausgestaltet sein könnten (nicht dargestellt).

Die beiden Lager 48, 49 sind beispielsweise an den jeweiligen Endbereichen des Lenkarmes 47 vorgesehen. Der Lenkarm 47 ist beispielsweise flachgestaltig, insbesondere plattenartig. Der Lenkarm 47 kann z.B. aus Metall oder Kunststoff sein. Beispielsweise umfassen die Lager 48, 49 Lagerbolzen, die in Lageraufnahmen am Grundträger 20 und am Lastenaufsatz 21 eingreifen. Es versteht sich, dass auch mehr als ein Lenkarm 47 pro Lageranordnung vorgesehen sein kann.

Beim Lastenträger 10 sind zwischen beiden Längsträgerpaaren bestehend aus einem Längsträger 34 und einem Längsträger 23 Lenkarme 47 vorgesehen. Die Lenkarme 47 bilden zusammen mit ihren Lagern 48, 49 sowie dem Schwenkschiebelager 43 am jeweiligen Längsträger 23, 34 ein Dreigelenk, von denen ein Gelenk eine Schiebebeweglichkeit bereitstellt, die beiden anderen Gelenke reine Schwenklager sind. Bereits dadurch ist eine optimale Beweglichkeit, dennoch hohe Führungsqualität gegeben.

Die Grundträger-Lager 48 sind beispielsweise etwa im Bereich der Längsmitte der Längsträger 34 angeordnet. Beispielsweise durchsetzen ihre Lagerbolzen 50 die Seitenwände 37.

Die Lastenaufsatz-Lager 49 sind an dem fahrzeugseitigen Endbereich eines jeweiligen Längsträgers 34 angeordnet. Beispielsweise sind Lagerbolzen 51 in nicht sichtbaren Lageraufnahmen an der Halterung 27 oder den von diesen umfassten Längsendbereichen der Längsträger 23 angeordnet. Somit schwenken also die Lastenaufsatz-Lager 49 um eine durch die Grundträger-Lager 48 definierte Schwenkachse 52. In diesem Sinne schwenkt selbstverständlich auch das fahrzeugseitige Ende des Lastenaufsatzes 21. Somit macht dieses also nicht nur eine Hoch-Tiefbewegung oder eine Tief-Hochbewegung, sondern schwenkt auch vom Heck 14 des Kraftfahrzeuges weg bzw. zu diesem hin. Weil zumindest ein hinterer Abschnitt, das heißt ein dem Heck 14 zugewandter Abschnitt, des Lastenaufsatzes 21 in einem mittleren Abschnitt der Längsträger 34, mithin also etwa im Bereich einer Längsmitte oder eines hinteren Längsdrittels des Grundträgers 20 verbleibt, ist der zum Verbringen des Lastenaufsatzes 21 in die Ladestellung L benötigte Raum hinter dem Lastenträger 10, somit also auch der benötigte Raum hinter dem Kraftfahrzeug 12, vergleichsweise klein.

Der Lastenaufsatz schwenkt also über einen vom Kraftfahrzeug 12 entfernten Endbereich 53 des Grundträgers 20 hinweg und gleitet dabei entlang zur horizontalen schrägstehenden Schiebeachse 45 nach unten. Allerdings ist diese Bewegung nach hinten unten begrenzt derart, dass ein Endbereich 54 des Lastenaufsatzes 21 auch in der Ladestellung L noch einen Abstand von einem Untergrund 19, beispielsweise einer Fahrbahn, hat.

Zu diesem Zweck sind mehrere Maßnahmen möglich:
Beispielsweise können flexible Fangelemente 55, 56 vorgesehen sein, die in der jeweiligen Endstellung, beispielsweise der Ladestellung L gespannt sind, ansonsten jedoch entspannt,
beispielsweise mit einem mehrfach gekrümmten Verlauf, wie in Figur 3 dargestellt. Das Fangelement 55 ist beispielsweise ein Band oder Seil, das einerseits am Grundträger 20, insbesondere dem Endbereich 53 desselben, festgelegt ist, z.B. angeklebt,
vernietet oder dergleichen, andererseits am Lastenaufsatz 21 befestigt, z.B. an dem Querträger 24. Dort kann das Fangelement 55 beispielsweise an einer Aufnahme 57 für das Ende des dort aufzunehmenden Längsträgers 23 befestigt sein.

Das Fangelement 56 ist, zur Verdeutlichung einer anderen Anbringungsweise, beispielsweise am Lenkarm 47 befestigt, beispielsweise in der Nähe des Lastenaufsatz-Lagers 49, z.B. dem Lagerbolzen 51, andererseits an einer Befestigung 58, z.B. einer Verschraubung, Verschweißung oder Niete, am Längsträger 23.

Eine andere Möglichkeit besteht darin, einen oder mehrere Endanschläge vorzusehen, an denen der Lastenaufsatz oder auch Komponenten der Lageranordnung 22 in der jeweiligen Endstellung (Transportstellung oder Ladestellung) anschlagen. Beispielsweise ist an einem Anschlagelement 60 ein Endanschlag 59 vorgesehen, an dem der Lenkarm 47 in der Ladestellung L anschlägt. Die Anschlagelemente 60 sind zweimal vorhanden, das heißt für jeden der Lenkarme 47 ist ein Endanschlag 59 vorhanden.

Des Weiteren ist es zweckmäßig, jedoch nicht notwendig, für eine Verrastung des Lastenaufsatzes 21 in einer oder mehreren Stellungen zu sorgen. Die Verrastung ist, ganz nebenbei bemerkt, nicht auf eine Lageranordnung in der Art des erfindungsgemäßen Ausführungbeispieles beschränkt, sondern könnte auch bei Lastenträgern vorgesehen sein, deren Lastenaufsatz bezüglich des Grundkörpers schiebbeweglich und/oder schwenkbeweglich in jeder Art gelagert ist. Beispielsweise ist am Lenkarm 47 ein Rastvorsprung 62 vorgesehen, der in eine zugeordnete Rastaufnahme 63 am Lastenaufsatz 21, beispielsweise den Haltern 28, in der Ladestellung L einrastet. Auch der Transportstellung T kann eine Verrastung zugeordnet sein, beispielsweise in Gestalt eines Rastvorsprungs 64, der in eine in der Zeichnung nicht sichtbare Rastaufnahme am Lastenaufsatz 21, beispielsweise ebenfalls an einem oder beiden der Halter 28, in der Transportstellung T einrastet.

Für einen sicheren Halt in der Transportstellung T sorgen jedoch insbesondere Verriegelungsmittel 65. Diese umfasst mindestens einen stabartigen Riegel 66, der in eine Riegelaufnahme 67 am Grundträger 20 in seiner Verriegelungsstellung (in Figur 2 dargestellt) eingreift. Das freie Ende des Riegels 66 gleitet beim Verstellen des Lastenaufsatzes 21 in die Transportstellung T an einer Einführschräge 68 entlang, bis der durch eine Feder 69 in seine Verriegelungsstellung belastete Riegel 66 schließlich in die Riegelaufnahme 67 einrastet. Die Einführschräge 68 und die Riegelaufnahme 67 werden beispielsweise von einem Riegelelement 70 bereitgestellt, das am Grundträger 20, beispielsweise einer dem gegenüberliegenden Längsträger 34 zugeordneten Seitenwand 37 des anderen Längsträgers 34, angeordnet ist.

Der Riegel 66 kann beispielsweise durch einen Handgriff 71 entriegelt werden. Der Handgriff 71 ist am Querträger 24 schwenkbar gelagert, kann also durch Schwenken um einen durch einen Pfeil 72 angedeutete Schwenkbewegung im Sinne eines Entriegelns des Riegels 66 verschwenkt werden. Dieser wird dann durch den Handgriff 71 in Richtung seiner Entriegelungsstellung entgegen der Kraft der Feder 69 gezogen. An dieser Stelle ist zu bemerken, dass die Entriegelung an der hinteren Querfront des Lastenträgers 10 bequem handhabbar ist.

Ein sicherer Halt und eine zuverlässige Führung des Lastenaufsatzes 21 bezüglich des Grundträgers 20 wird auch durch die nachfolgend beschriebene Maßnahme gewährleistet:
Die Schwenkschiebelager 43 umfassen Gleitkörper 75, die im Innenraum der Längsträger 23, die als Schienen ausgestaltet sind, angeordnet sind. Die Längsträger 23 sind an den Gleitkörpern 75 gleitverschieblich gelagert. Innenseiten ihrer Oberwände 38 sowie der unteren Bodenwände 40 gleiten dabei an Gleitflächen 76 der Gleitkörper 75 entlang. Die Gleitflächen 76 sind an einander entgegengesetzten Seiten der Gleitkörper 75 vorgesehen. Die Gleitkörper 75 ihrerseits sind über Schwenklager 77 am Grundträger 20 schwenkbar gelagert, beispielsweise in der Nähe des Endbereichs 53. Somit haben die Gleitkörper 75 bezüglich des Grundträgers 20 einen Schwenkfreiheitsgrad, bezüglich des Lastenaufsatzes 21 jedoch nur einen Schiebefreiheitsgrad. Da die Gleitfläche 76 eine langgestreckte Gestalt haben, liegen die Längsträger 23 über einen verhältnismäßig langen Bereich (bezogen auf die Schiebeachse 45) auf den Gleitkörpern 75 auf. Dadurch dass einander entgegengesetzte Gleitflächen 76 vorgesehen sind, ist zwar eine Gleitverschiebung entlang der Gleitflächen 76 möglich, quer dazu jedoch eine optimale Führung gewährleistet. Insoweit bilden auch die Gleitkörper 75 Bestandteile der Zwangsführungsmittel 46.

Bevorzugt ist die Anordnung so getroffen, dass beidseits, das heißt an einander entgegengesetzten Seiten, der Längsträger 34 jeweils ein Gleitkörper 75 vorgesehen ist, so dass die Längsträger 23 im Bereich ihrer beiden unteren Bodenwände 40, das heißt beidseits des Schlitzes 41, geführt sind. Weiterhin ist es zweckmäßig, wenn die Innenseiten der Seitenwände 39 an Stirnseiten 78 der klotzartigen Gleitkörper 75 im Wesentlichen flächig anliegen, so dass auch quer zur Schiebeachse 45 eine optimale Führung gewährleistet ist.

Bevorzugt ist die Anordnung so getroffen, dass die oberseitigen Gleitflächen 76 etwa mit der Oberwand 36 fluchten, wenn die Gleitkörper 75 eine der Transportstellung T entsprechende Schwenkposition einnehmen.

An den Stirnseiten 78 sind die Gleitkörper 75 zweckmäßig verrippt, was bei guter Führung der Längsträger 23 bzw. Schienen dennoch eine leichte Beweglichkeit gewährleistet. Eine Adhäsion ist daher nicht zu befürchten, insbesondere dann, wenn beim rauen Fahrbetrieb Feuchtigkeit in die Innenräume der Schienen bzw. Längsträger 23 eintritt.

In Figur 3 ist ein alternatives, ebenfalls mögliches Konzept angedeutet. Beispielsweise könnte anstelle eines oder beider Gleitkörper 75 eine Rollenanordnung vorgesehen sein. Bevorzugt ist dabei eine solche Konfiguration, dass ein Gleitkörper 75 mit einer Rolle 79 kombiniert ist, so dass auf der einen Seite ein Gleitkörper, auf der anderen Seite eine Rolle 79 vorhanden ist. Der Gleitkörper 75 hat optimale Führungseigenschaften, die Rolle 79 gewährleistet eine höhere Beweglichkeit.

Damit auch bei dem Vorsehen von Rollen eine bessere Führung möglich ist, könnte beispielsweise eine weitere Rolle 80 vorgesehen sein, die von der Rolle 79 separat und auch unabhängig von dieser frei drehbar gelagert ist. Die Rollen 79, 80 haben einander entgegengesetzt angeordnete Abrollflächen 81, 82, die an den genannten Innenflächen des Längsträgers 23 entlangrollen, das heißt der Innenseite der Oberwand 38 und an einer der unteren Bodenwände 40.

Ein weiteres, in der Zeichnung nicht dargestelltes Führungskonzept könnte vorsehen, dass zur Zwangsführung des Lastenaufsatzes eines erfindungsgemäßen Lastenträgers eine Kulissenführung vorgesehen ist. Beispielsweise könnten Gleitkörper vorgesehen sein, deren Schwenkbeweglichkeit durch eine Kulisse gesteuert wird. So wäre beispielsweise möglich, dass zwischen dem Grundträger 20, beispielsweise dessen Längsträger 34, und den Gleitkörpern 75, eine Kulissenführung mit einem Kulissenvorsprung und einer Kulissennut vorgesehen ist. Angedeutet ist beispielsweise eine um die Schwenkachse 44 verlaufende bogenförmige Nut am Gleitkörper 75, in die ein nicht sichtbarer Führungsdorn, beispielsweise in der Art des Rastvorsprungs 64, eingreift.

Der Riegel 66 wird von einem der Gleitkörper 75 geführt. Beispielsweise ist eine Führungsnut 73 vorhanden, die von dem stangenartigen Riegel 66 durchsetzt wird. Ein mit dem Gleitkörper 75 baugleicher Führungskörper 74 hat ebenfalls eine Führungsnut 73, die auch vom Riegel 66 durchgriffen wird. Der Führungskörper 74 ist an der Innenseite, konkret einer der Seitenwände 39, eines der Längsträger 23 angeordnet. Der Führungskörper 74 befindet sich dabei am vom Querträger 24 entgegengesetzten Endbereich des Längsträgers 23, das heißt in der Nähe der Riegelaufnahme 67, wenn der Lastenaufsatz 21 die Transportstellung T einnimmt. Dadurch ist also eine Führung des Riegels 66 an einander entgegengesetzten Längsendbereichen gegeben, der Riegel 66 mithin also optimal geführt.

Durch die Flachgestalt des Lenkarmes 47 ist es möglich, dass dieser in der Transportstellung T vollständig geschützt ist, nämlich im Innenraum des Längsträgers 23 angeordnet ist.

## Patentansprüche

1. Lastenträger für ein Kraftfahrzeug (12), mit einem an einem Heck des Kraftfahrzeugs (12) befestigbaren oder anordenbaren Grundträger (20), an dem ein zum Tragen einer Last vorgesehener Lastenaufsatz (21) mittels einer Lageranordnung (22) schwenkbar zwischen einer für einen Fahrbetrieb des Kraftfahrzeugs (12) vorgesehenen Transportstellung (T) und einer zum Be- und Entladen des Kraftfahrzeugs (12) vorgesehenen Ladestellung (L) schwenkbar und verschieblich gelagert ist, wobei die Lageranordnung (22) mindestens ein Schwenkschiebelager (43) aufweist, an dem der Lastenaufsatz (21) um eine Schwenkachse (44) schwenkbar und quer zu der Schwenkachse (44) verschieblich gelagert ist, und wobei der Lastenträger Zwangsführungsmittel (46) zum Führen des Lastenaufsatzes (21) zwischen der Transportstellung (T) und der Ladestellung (L) entlang eines definierten Stellweges umfasst, **dadurch gekennzeichnet, dass** die Zwangsführungsmittel (46) einen an dem Grundträger (20) mit einem Grundträger-Lager (48) und an dem Lastenaufsatz (21) mit einem Lastenaufsatz-Lager (49) beweglich gelagerten Lenkarm (47) umfassen, und dass das mindestens eine Schwenkschiebelager an einem von dem Heck des Kraftfahrzeugs entfernten, freien Endbereich des Grundträgers angeordnet ist und einen an einem Schwenklager (77) am Grundträger (20) schwenkbar gelagerten Gleitkörper (75) umfasst.

2. Lastenträger nach Anspruch 1, **dadurch gekennzeichnet, dass** der Lenkarm (47) in der Transportstellung (T) in einem Innenraum des Lastenaufsatzes (21), insbesondere einem Längsträger (23) oder einer Schiene, und/oder des Grundträgers (20), insbesondere einem Längsträger (34) oder einer schiene, zumindest im wesentlichen aufgenommen ist.

3. Lastenträger nach Anspruch 1 oder 2, **dadurch gekennzeichnet, dass** das Grundträger-Lager (48) und/oder das Lastenaufsatz-Lager (49) ein Schwenklager und/oder ein Schiebelager umfassen.

4. Lastenträger nach einem der Ansprüche 1 bis 3, **dadurch gekennzeichnet, dass** das Grundträger-Lager (48) und/oder das Lastenaufsatz-Lager (49) ausschließlich eine Schwenkbewegung zulassen und/oder dass das Lastenaufsatz-Lager (49) an einem dem Heck des Kraftfahrzeugs (12) beim Betrieb des Lastenträgers (10) zugeordneten Endbereich (54) des Lastenaufsatzes (21) angeordnet ist.

5. Lastenträger nach einem der vorhergehenden Ansprüche, **dadurch gekennzeichnet, dass** das mindestens eine Schwenkschiebelager (43), das Grundträger-Lager (48) und das Lastenaufsatz-Lager (49) ein Dreigelenk bilden.

6. Lastenträger nach einem der vorhergehenden Ansprüche, **dadurch gekennzeichnet, dass** das mindestens eine Schwenkschiebelager (43) mindestens eine Rolle (79, 80) umfasst.

7. Lastenträger nach einem der vorhergehenden Ansprüche, **dadurch gekennzeichnet, dass** die Zwangsführungsmittel (46) mindestens ein Paar drehbar gelagerter Rollen (79, 80), die an einander entgegengesetzten Seiten jeweils eine Abrollfläche (81, 82) aufweisen, und/oder mindestens einen Gleitkörper (75) umfassen, der an einander entgegengesetzten Seiten jeweils eine Gleitfläche (76) aufweist, wobei an den Abrollflächen (81, 82) oder den Gleitflächen (76) einander gegenüberliegende Innenflächen einer Schiene des Grundträgers (20) oder des Lastenaufsatzes (21) rollbar oder gleitverschieblich gelagert sind.

8. Lastenträger nach Anspruch 6 oder 7, **dadurch gekennzeichnet, dass** der mindestens eine Gleitkörper (75) an dem Grundträger (20) oder dem Lastenaufsatz (21) schwenkbar gelagert ist und/oder einen Bestandteil des mindestens einen Schwenkschiebelagers (43) bildet.

9. Lastenträger nach einem der vorhergehenden Ansprüche, **dadurch gekennzeichnet, dass** er Rastmittel (61) zum Verrasten und/oder Verriegelungsmittel (65) zum Verriegeln des Lastenaufsatzes (21) in der Transportstellung (T) und/oder der Ladestellung (L) umfasst.

10. Lastenträger nach Anspruch 9, **dadurch gekennzeichnet, dass** die Verriegelungsmittel (65) einen an dem Lastenaufsatz (21), insbesondere in Längsrichtung des Lastenträgers (10), beweglich gelagerten Riegel (66) umfasst, wobei der Riegel (66) an dem Schwenkschiebelager (43) geführt ist und/oder das Schwenkschiebelager (43) durchsetzt.

11. Lastenträger nach einem der vorhergehenden Ansprüche, **dadurch gekennzeichnet, dass** er zur Begrenzung des Stellweges des Lastenaufsatzes (21) in der Ladestellung (L) und/oder der Transportstellung (T) ein flexibles, in der Ladestellung (L) oder der Transportstellung (T) gespanntes, davon entfernt entspanntes Fangelement (55, 56) und/oder mindestens einen Endanschlag (59) aufweist, an dem der Lastenaufsatz (21) und/oder die Lager-anordnung (22) in der Transportstellung (T) und/oder der Ladestellung (L) anschlägt.

12. Lastenträger nach einem der vorhergehenden Ansprüche, **dadurch gekennzeichnet, dass** ein freier, vom Grundträger (20) in der Ladestellung (L) am weitesten entfernter Endbereich (54) des Lastenaufsatzes (21) in der Ladestellung (L) einen solchen Abstand von dem Grundträger (20) aufweist, dass der Lastenaufsatz (21) im am Kraftfahrzeug (12) montierten Zustand des Lastenträgers (10) von einem Untergrund (19) entfernt ist.

13. Lastenträger nach einem der vorhergehenden Ansprüche, **dadurch gekennzeichnet, dass** er eine Befestigungseinrichtung (11) zur lösbaren Befestigung des Lastenträgers (10) an dem Kraftfahrzeug (12), insbesondere an einer Anhängekupplung (13) des Kraftfahrzeugs (12), oder eine Fahrzeug-Lageranordnung zum insbesondere in der Art einer Schublade beweglichen Lagern an dem Kraftfahrzeug (12) umfasst.

## Claims

1. Load carrier for a motor vehicle (12), with a base support (20) which may be attached or fitted to the rear of the motor vehicle (12) and on which is pivotably and movably mounted a load attachment (21) provided for the carrying of a load and pivotable by means of a bearing assembly (22) between a transport position (T) provided for vehicle operation of the motor vehicle (12) and a loading position (L) provided for loading and unloading of the motor vehicle (12), wherein the bearing assembly (22) has at least one swivel/slide bearing (43) on which the load attachment (21) is mounted pivotably around a swivel axis (44) and movable transversely to the swivel axis (44), and wherein the load carrier includes positive guidance means (46) to guide the load attachment (21) between the transport position (T) and the loading position (L) along a defined positioning path, **characterised in that** the positive guidance means (46) comprise a steering arm (47), movably mounted on the base support (20) by a base support bearing (48) and on the load attachment (21) by a load attachment bearing (49), and that the swivel/slide bearing or bearings is or are located on a free end section of the base support at a distance from the rear of the motor vehicle and include a slide body (75) mounted pivotably on a swivel bearing (77) on the base support (20).

2. Load carrier according to claim 1, **characterised in that** the steering arm (47) in the transport position (T) is accommodated, at least substantially, in an inner space of the load attachment (21), in particular a longitudinal member (23) or a rail, and/or of the base support (20), in particular a longitudinal member (34) or a rail.

3. Load carrier according to claim 1 or 2, **characterised in that** the base support bearing (48) and/or the load attachment bearing (49) include a swivel bearing and/or a sliding bearing.

4. Load carrier according to any of claims 1 to 3, **characterised in that** the base support bearing (48) and/or the load attachment bearing (49) allow only a swivelling movement and/or that the load attachment bearing (49) is located on an end section (54) of the load attachment (21) assigned to the rear of the motor vehicle (12) in operation of the load carrier (10).

5. Load carrier according to any of the preceding claims, **characterised in that** the swivel/slide bearing or bearings (43), the base support bearing (48) and the load attachment bearing (49) form a three-hinged joint.

6. Load carrier according to any of the preceding claims, **characterised in that** the swivel/slide bearing or bearings (43) include(s) at least one roller (79, 80).

7. Load carrier according to any of the preceding claims, **characterised in that** the forced guidance means (46) have at least one pair of rotatably mounted rollers (79, 80), each having a rolling surface (81, 82) on sides opposite one another, and/or at least one slide body (75), each having a sliding surface (76) on sides opposite one another, wherein on the rolling surfaces (81, 82) or the sliding surfaces (76), inner faces of a rail of the base support (20) or the load attachment (21) are mounted with the ability to roll or slide.

8. Load carrier according to claim 6 or 7, **characterised in that** the slide body or bodies (75) is or are pivotably mounted on the base support (20) or the load attachment (21) and/or form a part of the swivel/slide bearing or bearings (43).

9. Load carrier according to any of the preceding claims, **characterised in that** it includes latching means (61) for latching and/or locking means (65) for locking the load attachment (21) in the transport position (T) and/or the loading position (L).

10. Load carrier according to claim 9, **characterised in that** the locking means (65) include a bolt (66), movably mounted on the load attachment (21), in particular in the axial direction of the load carrier (10), wherein the bolt (66) is guided on the swivel/slide bearing (43) and/or passes through the swivel/slide bearing (43).

11. Load carrier according to any of the preceding claims **characterised in that** it has, to limit the positioning travel of the load attachment (21) in the loading position (L) and/or the transport position (T), a flexible catch element (55, 56), clamped in the loading position (L) or the transport position (T), removed it unclamped, and/or at least one end stop (59), against which the load attachment (21) and/or the bearing assembly (22) hit in the transport position (T) and/or the loading position (L).

12. Load carrier according to any of the preceding claims, **characterised in that** a free end section (54) of the load attachment (21) which is furthest away from the base support (20) in the loading position (L), has in the loading position (L) such clearance from the base support (20) that the load attachment (21) is moved away from a base (19) when the load carrier (10) is fitted to the motor vehicle (12).

13. Load carrier according to any of the preceding claims, **characterised in that** it includes a fastening device (11) for releasable fastening of the load carrier (10) to the motor vehicle (12), in particular to a trailer coupling (13) of the motor vehicle (12), or a vehicle bearing assembly for movable mounting on the motor vehicle (12), in particular in the manner of a drawer.

## Revendications

1. Support de charges destiné à un véhicule automobile (12), comprenant un support de base (20) pouvant être fixé ou disposé au niveau de l'arrière du véhicule automobile (12), au niveau duquel support de base, un système recevant des charges (21), prévu pour supporter une charge, est monté de manière à pouvoir être déplacé et de manière à pouvoir pivoter, au moyen d'un ensemble de paliers (22), de manière à pouvoir pivoter entre une position de transport (T) prévue pour un mode marche du véhicule automobile (12) et une position de chargement (L) prévue pour charger et décharger le véhicule automobile (12), sachant que l'ensemble de paliers (22) présente au moins un palier coulissant pivotant (43), au niveau duquel le système recevant des charges (21) est monté de manière à pouvoir pivoter autour d'un axe de pivotement (44) et de manière à pouvoir être déplacé transversalement à l'axe de pivotement (44), et sachant que le support de charges comprend des moyens de guidage forcé (46) servant à guider le système recevant des charges (21) entre la position de transport (T) et la position de chargement (L) le long d'une course de réglage définie, **caractérisé en ce que** les moyens de guidage forcé (46) comprennent un bras de direction (47) monté de manière mobile, par un palier (48) de support de base, au niveau du support de base (20) et, par un palier (49) de système recevant des charges, au niveau du système recevant des charges (21), et **en ce que** le palier coulissant pivotant au moins au nombre de un est disposé au niveau d'une zone d'extrémité libre éloignée de l'arrière du véhicule automobile, du support de base et comprend un corps coulissant (75) monté au niveau d'un palier pivotant (77) de manière à pouvoir pivoter au niveau du support de base (20).

2. Support de charges selon la revendication 1, **caractérisé en ce que** le bras de direction (47) est logé au moins essentiellement, dans la position de transport (T) dans un espace intérieur du système recevant des charges (21), au particulier dans un support longitudinal (23) ou un rail, et/ou dans un espace intérieur du support de base (20), en particulier dans un support longitudinal (34) ou dans un rail.

3. Support de charges selon la revendication 1 ou 2, **caractérisé en ce que** le palier (48) de support de base et/ou le palier (49) de système recevant des charges comprennent un palier pivotant et/ou un palier coulissant.

4. Support de charges selon l'une quelconque des revendications 1 à 3, **caractérisé en ce que** le palier (48) de support de base et/ou le palier (49) de système recevant des charges autorisent exclusivement un mouvement de pivotement, et/ou **en ce que** le palier (49) de système recevant des charges est disposé au niveau d'une zone d'extrémité (54) du système recevant des charges (21), ladite zone d'extrémité étant associée à l'arrière du véhicule automobile (12) lors du fonctionnement du support de charges (10).

5. Support de charges selon l'une quelconque des revendications précédentes, **caractérisé en ce que** le palier coulissant pivotant (43) au moins au nombre de un, le palier (48) de support de base et le palier (49) de système recevant des charges forment un élément à trois articulations.

6. Support de charges selon l'une quelconque des revendications précédentes, **caractérisé en ce que** le palier coulissant pivotant (43) au moins au nombre de un comprend au moins un galet (79, 80).

7. Support de charges selon l'une quelconque des revendications précédentes, **caractérisé en ce que** les moyens de guidage forcé (46) comprennent au moins une paire de galets (79, 80) montés de manière à pouvoir tourner, lesquels galets présentent, au niveau de côtés opposés les uns aux autres, respectivement une surface de roulement (81, 82), et/ou au moins un corps coulissant (75), qui présente, au niveau de côtés opposés les uns aux autres, respectivement une surface coulissante (76), sachant que des surfaces intérieures se faisant face d'un rail du support de base (20) ou du système recevant des charges (21) sont montées de manière à pouvoir rouler ou de manière à pouvoir être déplacées par coulissement au niveau des surfaces de roulement (81, 82) ou des surfaces coulissantes (76).

8. Support de charges selon la revendication 6 ou 7, **caractérisé en ce que** le corps coulissant (75) au moins au nombre de un est monté de manière à pouvoir pivoter au niveau du support de base (20) ou au niveau du système recevant des charges (21), et/ou fait partie intégrante du palier coulissant pivotant (43) au moins au nombre de un.

9. Support de charges selon l'une quelconque des revendications précédentes, **caractérisé en ce qu'**il comprend des moyens d'encliquetage (61) servant à encliqueter et/ou des moyens de verrouillage (65) servant à verrouiller le système recevant des charges (21) dans la position de transport (T) et/ou dans la position de chargement (L).

10. Support de charges selon la revendication 9, **caractérisé en ce que** les moyens de verrouillage (65) comprennent un verrou (66) monté de manière mobile au niveau du système recevant des charges (21), en particulier dans la direction longitudinale du support de charges (10), sachant que le verrou (66) est guidé au niveau du palier coulissant pivotant (43) et/ou traverse le palier coulissant pivotant (43).

11. Support de charges selon l'une quelconque des revendications précédentes, **caractérisé en ce qu'**il présente un élément d'interception (55, 56) flexible, tendu dans la position de chargement (L) ou la position de transport (T), détendu dans le cas contraire, et/ou au moins une butée d'extrémité (59) afin de délimiter la course de réglage du système recevant des charges (21) dans la position de chargement (L) et/ou dans la position de transport (T), le système recevant des charges (21) et/ou l'ensemble de paliers (22) venant buter contre l'élément d'interception et/ou contre la butée d'extrémité dans la position de transport (T) et/ou dans la position de chargement (L).

12. Support de charges selon l'une quelconque des revendications précédentes, **caractérisé en ce qu'**une zone d'extrémité (54) libre, la plus éloignée du support de base (20) dans la position de chargement (L), du système recevant des charges (21), présente, dans la position de chargement (L) une distance telle du support de base (20) que le système recevant des charges (21) est éloigné d'un sol (19) lorsque le support de charges (10) est installé au niveau du véhicule automobile (12).

13. Support de charges selon l'une quelconque des revendications précédentes, **caractérisé en ce qu'**il comprend un dispositif de fixation (11) servant à fixer de manière amovible le support de charges (10) au niveau du véhicule automobile (12), en particulier au niveau d'un attelage de remorque (13) du véhicule automobile (12), ou un ensemble de paliers de véhicule destiné en particulier à être monté de manière mobile à la manière d'un tiroir au niveau du véhicule automobile (12).
